# EUROPÄISCHE PATENTANMELDUNG

(11) **EP 1 738 875 A1**
(43) Veröffentlichungstag der Anmeldung: **03.01.2007**
(21) Anmeldenummer: 06012486.4
(22) Anmeldetag: 19.06.2006
(51) Int. Cl.: B25B 5/16, B25B 5/06

(54) **Fertigungspalette**

(30) Priorität: 30.06.2005 DE 102005030910
(71) Anmelder: DE-STA-CO Europe GmbH, 61440 Oberursel (DE)
(72) Erfinder: Schauss, Peter, 65439 Flörsheim (DE)
(74) Vertreter: Wolf, Michael

(57) **Zusammenfassung**

Die Erfindung betrifft eine Fertigungspalette, umfassend ein Trägerelement (1) auf dem zur Fixierung eines Werkstückes mindestens ein fluidisch betätigbares Positionierelement (2) angeordnet ist. Nach der Erfindung ist vorgesehen, dass die Fertigungspalette mindestens ein Positionsanzeigeelement (3) aufweist, das über einen Bowdenzug (4) mit dem Positionierelement (2) wirkverbunden und zur Stellungsanzeige des Positionierelements (2) von außerhalb der Fertigungspalette abfragbar ausgebildet ist.

## Beschreibung

Die Erfindung betrifft eine Fertigungspalette gemäß dem Oberbegriff des Patentanspruchs 1.

Beispielsweise im Automobilbau gibt es Fertigungsverfahren, bei denen die Positionierelemente (Zentrier-, Spannvorrichtungen oder dergleichen) auf sogenannten Paletten aufgebaut sind. Diese umfassen ein Trägerelement auf dem zur Fixierung des Werkstückes (Bauteils) mindestens ein fluidisch (pneumatisch oder hydraulisch) betätigbares Positionierelement angeordnet ist. Elektrische Positionierelemente sind regelmäßig nicht vorgesehen, da diese eine kontinuierliche Stromversorgung der Palette während der Fertigung erfordern würden, was aber aufgrund des damit verbundenen Aufwands nicht erwünscht ist.

Zum Positionieren bzw. Spannen der Bauteile wird die Palette zu Beginn des Fertigungsprozesses einmalig an eine Pneumatik- bzw. Hydraulikanlage angeschlossen. Danach wird die Palette in die nächste Bearbeitungsstation transportiert. Die Spann- bzw. Positionierelemente sollen dabei während der gesamten Bearbeitung beispielsweise mittels eines Kniehebelspannmechanismus' in Spannstellung gehalten werden. Da die Paletten aber, wie erwähnt, bewußt stromlos ausgeführt sind, ist es derzeit nicht möglich, die tatsächliche Stellung der Positionierelemente (die sich u. U. ungewollt verändert hat) an jeder einzelnen Bearbeitungsstation zu überprüfen bzw. zu kontrollieren.

Der Erfindung liegt demgemäß die Aufgabe zugrunde, eine Fertigungspalette der eingangs genannten Art dahingehend weiter zu bilden, dass auf möglichst einfache Weise, und ohne die Palette selbst mit Strom versorgen zu müssen, eine gezielte Abfrage der einzelnen Positionierelemente der Palette in einer Bearbeitungsstation möglich ist.

Diese Aufgabe ist mit einer Fertigungspalette der eingangs genannten Art durch die im Kennzeichen des Patentanspruchs 1 aufgeführten Merkmale gelöst.

Nach der Erfindung ist also vorgesehen, dass die Fertigungspalette mindestens ein Positionsanzeigeelement aufweist, das über einen Bowdenzug mit dem Positionierelement wirkverbunden und zur Stellungsanzeige des Positionierelements von außerhalb der Fertigungspalette abfragbar ausgebildet ist.

Gemäß Wikipedia (siehe http://de.wikipedia.org, Stand: 27. Juni 2005) ist ein Bowdenzug ein Kabel, das zur Übertragung von Zugkräften, insbesondere entlang gekrümmter Wege, dient. Er besteht aus einem Drahtseil, das durch ein kunststoff- oder textilummanteltes und flexibles Hohlkabel verlegt wird, in dem es sich anschließend leicht bewegen lässt. Die Ummantelung schützt den Zug vor äußeren Beschädigungen und dient zugleich als mechanische Führung des Zugs, so dass der Zug Kräfte auch über mehrfach gebogene Pfade übertragen kann. Benannt ist der Bowdenzug nach seinem Erfinder, Sir Harold Bowden (1880-1960). Eingesetzt werden Bowdenzüge unter anderem für Bremsen und Gangschaltungen bei Fahrrädern, als Gas- und Kupplungszug bei Motorrädern und bei Auslösemechanismen in der professionellen Fotografie.

Mit anderen Worten ausgedrückt, besteht die Erfindung also darin, die aktuelle Spannstellung jedes Positionierelements mittels eines flexiblen Bowdenzuges an ein Positionsanzeigeelement zu übertragen, welches in der Bearbeitungsstation beispielsweise mittels einer Lichtschranke auswertbar ist. Es ist mithin mindestens ein - bei mehreren Positionierelementen entsprechend mehrere - Positionsanzeigeelement vorgesehen, das beispielsweise an einer vordefinierten Stelle am Rand der Fertigungspalette angeordnet ist und dementsprechend zielsicher bei Eintreffen der Fertigungspalette in der Bearbeitungsstation von einer entsprechenden Ausleseeinheit (z. B. und wie erwähnt eine Lichtschranke) auswertbar ist.

Andere vorteilhafte Weiterbildungen der Erfindung ergeben sich aus den abhängigen Patentansprüchen.

Die erfindungsgemäße Fertigungspalette einschließlich ihrer vorteilhaften Weiterbildungen gemäß der abhängigen Patentansprüche wird nachfolgend anhand der zeichnerischen Darstellung verschiedener Ausführungsbeispiele näher erläutert.

Es zeigt
- Figur 1: perspektivisch die Fertigungspalette mit einem Positionierelement und einem Positionsanzeigeelement;
- Figur 2: von oben ein als Spannvorrichtung ausgebildetes Positionierelement mit einem daran angeordneten Bowdenzug;
- Figur 3: von der Seite die Spannvorrichtung gemäß Figur 2 mit dem erfindungsgemäßen Bowdenzug;
- Figur 4: von der Seite die Anordnung des Bowdenzuges am Positionsanzeigeelement;
- Figur 5: von oben ein Positionsanzeigeelement mit vier Bowdenzügen und einer Lichtschranke zur Positionsbestimmung; und
- Figur 6: im Schnitt eine alternative Anordnung des Bowdenzuges am Positionsanzeigeelement mit einem Näherungssensor.

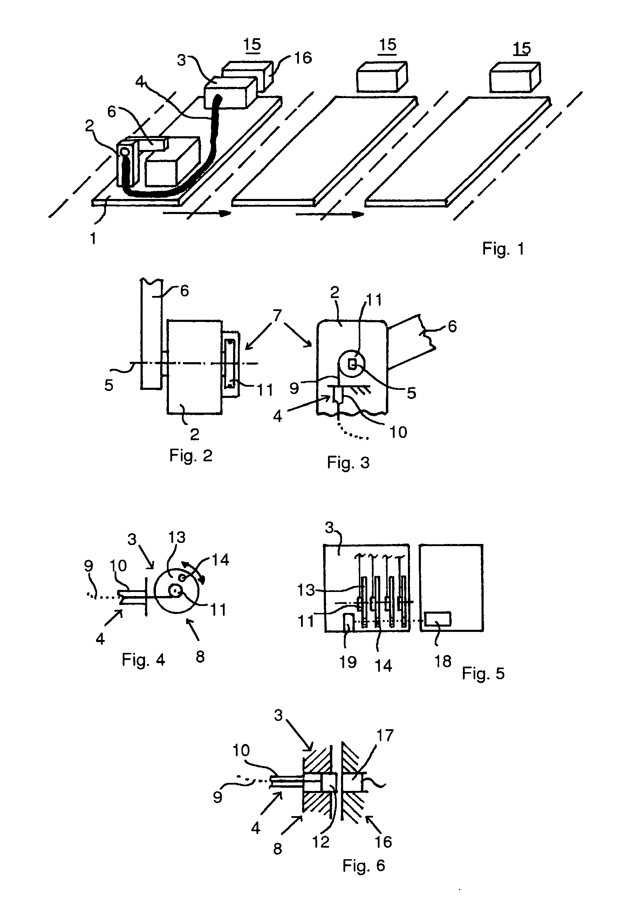

In Figur 1 ist die erfindungsgemäße Fertigungspalette in einer Fertigungsstrasse abstrahiert dargestellt. Die Fertigungspalette umfasst ein Trägerelement 1, auf dem zur Fixierung eines Werkstückes mindestens ein fluidisch betätigbares Positionierelement 2 angeordnet ist.

Nicht im einzelnen dargestellt, weil bei derartigen Fertigungspalette üblich, ist vorgesehen, dass das mindestens eine Positionierelement 2 je nach zu bearbeitendem Werkstück an verschiedenen Stellen auf dem Trägerelement 1 befestigbar ausgebildet ist. Darüber hinaus kann das mindestens eine Positionierelement 2 je nach Anwendungsfall in bekannter Weise wahlweise pneumatisch oder hydraulisch betätigbar und als Spann-oder Zentriervorrichtung ausgebildet sein.

Das Trägerelement 1 ist, wie üblich, vorzugsweise ebenflächig und rechteckig ausgebildet, wobei an diesem natürlich mehrere (und nicht nur ein - wie vereinfacht dargestellt) Positionierelemente 2 befestigbar sind.

Wesentlich für die erfindungsgemäße Fertigungspalette ist nun, dass diese mindestens ein Positionsanzeigeelement 3 aufweist, das über einen Bowdenzug 4 mit dem Positionierelement 2 wirkverbunden und zur Stellungsanzeige des Positioniereiements 2 von außerhalb der Fertigungspalette abfragbar ausgebildet ist.

Wie insbesondere aus Figur 1 ersichtlich, kann aufgrund dieser Maßgabe die Stellung der einzelnen Positionierelemente (2) auch ohne elektrische Stromversorgung (stromlos) der Paletten auf sehr einfache Weise an den einzelnen Bearbeitungsstationen ermittelt werden.

Bezüglich des Positionierelements 2 ist in an sich bekannter Weise vorgesehen, dass dieses eine drehbare Schwenkachse 5 aufweist (siehe insbesondere Figur 2 und 3), an der wahlweise ein Spannelement 6 (alternativ ein Zentrierelement, nicht dargestellt) angeordnet ist. Um die Information über die Stellung dieses Spannelements weitergeben zu können, ist das erste Ende des Bowdenzuges 4 über einen ersten Umlenkmechanismus 7 mit der Schwenkachse 6 des Positionierelements 2 wirkverbunden. Das zweite Ende des Bowdenzuges 4 ist (siehe hierzu Figur 4) über einen zweiten Umlenkmechanismus 8 mit dem Positionsanzeigeelement 3 wirkverbunden.

Der Bowdenzug 4 besteht in bekannter Weise aus einem innenliegenden Zugseil 9 und einem das zugseil 9 umschließenden Hohlmantel 10 (siehe Figur 3, 4 und 6). Dabei umfasst ferner wahlweise der erste und/oder der zweite Umlenkmechanismus 7, 8 eine Scheibe 11, auf die das Zugzeil 9 des Bowdenzuges 4 aufwickelbar ist.

Damit das Positionsanzeigeelement 3 innerhalb der Fertigungsstrasse gut detektierbar ist, ist dieses stets an einem bestimmten, vorgeschriebenen Randbereich des Trägerelements 1 angeordnet, d. h. jede Palette weist an der gleichen Stelle das entsprechende Positionsanzeigeelement 3 auf, wobei an jeder Bearbeitungsstation 16 ein mit dem Positionsanzeigeelement 3 korrespondierendes Positionserfassungselement 16 angeordnet ist.

Bezüglich des Positionsanzeigeelements 3 ist nach einer ersten in Figur 6 dargestellten Alternative vorgesehen, dass dieses mindestens einen axialverstellbaren Stift 12 umfasst, der über den Bowdenzug 4 betätigbar ausgebildet ist. Dementsprechend umfasst das Positionserfassungselement 16 einen Sensor 17, der in der Bearbeitungsstation 15 mit dem Stift 12 des Positionsanzeigeelements 3 wirkverbindbar ist. "Wirkverbindbar" bedeutet in diesem Zusammenhang, dass die Informationsübermittlung je nach Bedarf sowohl per Kontakt, vorzugsweise aber auch kontaktfrei erfolgen kann.

Nach einer zweiten, in Figur 4 und 5 dargestellten Alternative ist schließlich vorgesehen, dass das Positionsanzeigeelement 3 mindestens eine mit der Scheibe 11 verbundene Positionsdrehschreibe 13 mit mindestens einer Durchgangsöffnung 14 aufweist. In diesem Fall umfasst das Positionserfassungselement 16 eine Lichtschranke 18, der am Positionsanzeigeelement 3 ein Reflektor 19 zugeordnet ist, wobei im Lichtweg zwischen der Lichtschranke 18 und dem Reflektor 19 mindestens eine Positionsdrehschreibe 13 positioniert ist. Befinden sich also beispielsweise alle Positionierelemente 2 in Spannstellung, folgt hieraus, dass alle Durchgangsöffnungen 14 den Lichtdurchgang für die Lichtschranke freigeben, d. h. das Positionserfassungselement 16 kann feststellen, dass alle Spanner geschlossen sind.

### Bezugszeichenliste

- 1: Trägerelement
- 2: Positionierelement
- 3: Positionsanzeigeelement
- 4: Bowdenzug
- 5: Schwenkachse
- 6: Spann- oder Zentrierelement
- 7: Umlenkmechanismus
- 8: Umlenkmechanismus
- 9: Zugseil
- 10: Hohlmantel
- 11: Scheibe
- 12: Stift
- 13: Positionsdrehschreibe
- 14: Durchgangsöffnung
- 15: Bearbeitungsstation
- 16: Positionserfassungselement
- 17: Sensor
- 18: Lichtschranke
- 19: Reflektor

## Patentansprüche

1. Fertigungspalette, umfassend ein Trägerelement (1), auf dem zur Fixierung eines Werkstückes mindestens ein fluidisch betätigbares Positionierelement (2) angeordnet ist,
**dadurch gekennzeichnet,**
**dass** die Fertigungspalette mindestens ein Positionsanzeigeelement (3) aufweist, das über einen Bowdenzug (4) mit dem Positionierelement (2) wirkverbunden und zur Stellungsanzeige des Positionierelements (2) von außerhalb der Fertigungspalette abfragbar ausgebildet ist.

2. Fertigungspalette nach Anspruch 1, wobei das mindestens eine Positionierelement (2) eine drehbare Schwenkachse (5) aufweist, an der wahlweise ein Spann- oder Zentrierelement (6) angeordnet ist,
**dadurch gekennzeichnet,**
**dass** ein erstes Ende des Bowdenzuges (4) über einen ersten Umlenkmechanismus (7) mit der Schwenkachse (6) des Positionierelements (2) wirkverbunden ist.

3. Fertigungspalette nach Anspruch 1 oder 2,
**dadurch gekennzeichnet,**
**dass** ein zweites Ende des Bowdenzuges (4) über einen zweiten Umlenkmechanismus (8) mit dem Positionsanzeigeelement (3) wirkverbunden ist.

4. Fertigungspalette nach Anspruch 2 oder 3, wobei der Bowdenzug (4) aus einem innenliegenden Zugseil (9) und einem das Zugseil (9) umschließenden Hohlmantel (10) besteht,
**dadurch gekennzeichnet,**
**dass** wahlweise der erste und/oder der zweite Umlenkmechanismus (7, 8) eine Scheibe (11) umfasst, auf die das Zugzeil (9) des Bowdenzuges (4) aufwickelbar ist.

5. Fertigungspalette nach einem der Ansprüche 1 bis 4,
**dadurch gekennzeichnet,**
**dass** das Positionsanzeigeelement (3) an einem bestimmten Randbereich des Trägerelements (1) angeordnet ist.

6. Fertigungspalette nach einem der Ansprüche 1 bis 5,
**dadurch gekennzeichnet,**
**dass** das Positionsanzeigeelement (3) mindestens einen axialverstellbaren Stift (12) umfasst, der über den Bowdenzug (4) betätigbar ausgebildet ist.

7. Fertigungspalette nach Anspruch 4,
**dadurch gekennzeichnet,**
**dass** das Positionsanzeigeelement (3) mindestens eine mit der Scheibe (11) verbundene Positionsdrehschreibe (13) mit mindestens einer Durchgangsöffnung (14) aufweist.

8. Fertigungspalette nach einem der Ansprüche 1 bis 7,
**dadurch gekennzeichnet,**
**dass** das mindestens eine Positionierelement (2) je nach zu bearbeitenden Werkstück an verschiedenen Stellen auf dem Trägerelement (1) befestigbar ausgebildet ist.

9. Fertigungspalette nach einem der Ansprüche 1 bis 8,
**dadurch gekennzeichnet,**
**dass** das mindestens eine Positionierelement (2) wahlweise pneumatisch oder hydraulisch betätigbar ausgebildet ist.

10. Fertigungspalette nach einem der Ansprüche 1 bis 9,
**dadurch gekennzeichnet,**
**dass** das mindestens eine Positionierelement (2) wahlweise als Spann- oder Zentriervorrichtung ausgebildet ist.

11. Fertigungspalette nach einem der Ansprüche 1 bis 10,
**dadurch gekennzeichnet,**
**dass** das Trägerelement (1) ebenflächig und rechteckig ausgebildet ist.

12. Fertigungspalette nach einem der Ansprüche 1 bis 11,
**dadurch gekennzeichnet,**
**dass** am Trägerelement (1) mehrere Positionierelemente (2) befestigbar sind.

13. Fertigungsstrasse mit mehreren Bearbeitungsstationen (15) für eine Fertigungspalette nach einem der Ansprüche 1 bis 12,
**dadurch gekennzeichnet,**
**dass** an jeder Bearbeitungsstation (16) ein mit dem Positionsanzeigeelement (3) korrespondierendes Positionserfassungselement (16) angeordnet ist.

14. Fertigungsstrasse nach Anspruch 13,
**dadurch gekennzeichnet,**
**dass** das Positionserfassungselement (16) einen Sensor (17) umfasst, der in der Bearbeitungsstation (15) mit dem Stift (12) des Positionsanzeigeelements (3) wirkverbindbar ist.

15. Fertigungsstrasse nach Anspruch 13,
**dadurch gekennzeichnet,**
**dass** das Positionserfassungselement (16) eine Lichtschranke (18) umfasst, der am Positionsanzeigeelement (3) ein Reflektor (19) zugeordnet ist, wobei im Lichtweg zwischen der Lichtschranke (18) und dem Reflektor (19) mindestens eine Positionsdrehschreibe (13) positioniert ist.
